# EUROPÄISCHE PATENTSCHRIFT

(11) **EP 1 781 979 B1**
(45) Veröffentlichungstag und Bekanntmachung des Hinweises auf die Patenterteilung: **25.11.2009**
(21) Anmeldenummer: 05771788.6
(22) Anmeldetag: 03.08.2005
(51) Int. Cl.: F16L 37/098, F16L 37/12

(54) **STECKVERBINDUNG FÜR FLUID-LEITUNGEN**
PLUG CONNECTION FOR FLUID LINES
RACCORD EMBOITABLE POUR CONDUITES FLUIDIQUES

(30) Priorität: 16.08.2004 DE 202004012795 U
(43) Veröffentlichungstag der Anmeldung: 09.05.2007
(73) Patentinhaber: Voss Automotive GmbH, 51688 Wipperfürth (DE)
(72) Erfinder: BILSTEIN, Rozália, 51688 Wipperfürth (DE); KAMINSKI, Volker, 58553 Halver (DE); BRANDT, Josef, 51688 Wipperfürth (DE)
(74) Vertreter: Zapf, Christoph
(86) Internationale Anmeldenummer: PCT/EP2005/053806
(87) Internationale Veröffentlichungsnummer: WO 2006/018384

(56) Entgegenhaltungen:
- DE-A1- 19 648 162
- US-A- 3 930 674
- US-A- 5 542 717
- US-B1- 6 347 815

## Beschreibung

Die vorliegende Erfindung betrifft eine Steckverbindung für Fluid-Leitungen, bestehend aus zwei zusammensteckbaren Kupplungsteilen, und zwar insbesondere einem Muffenteil und einem Steckerteil, wobei das Steckterteil mit einem Steckerschaft dichtend in eine Aufnahmeöffnung des Muffenteils einsteckbar und im eingesteckten Zustand über eine Verriegelungseinrichtung lösbar arretierbar ist, wobei die Verriegelungseinrichtung einerseits aus zwei äußeren, radialen, flanschartige und im eingesteckten Zustand axial, in Steckrichtung benachbarten Haltestegen der beiden Kupplungsteile und andererseits aus mindestens einem Halteelement besteht, welches mit mindestens einem im Axialschnitt C-förmigen Halteabschnitt die Haltestege der beiden Kupplungsteile formschlüssig axial und radial umgreift.

In diesem Zusammenhang ist der Begriff "Fluid" als beliebiges, flüssiges und/oder gasförmiges Strömung- bzw. Druckmittel zu verstehen. Somit eignet sich die Steckverbindung sowohl für hydraulische als auch für pneumatische sowie für hydropneumatische Anwendungen. Ein bevorzugtes Anwendungsgebiet der erfindungsgemäßen Steckverbindung ist aber die Verbindung von Kraftstoffleitungen in Kraftfahrzeugen.

Eine Steckverbindung der gattungsgemäßen Art ist in der DE-OS 2 414 821 bzw. der korrespondierenden US 3 930 674 beschrieben. Dabei ist ein Steck- und Verriegelungsprinzip vorgesehen, wonach beide Kupplungsteile jeweils einen von zwei äußeren Ringflanschen aufweisen, die im gesteckten Zustand axial benachbart sind und mit einem klammerartigen Halteelement arretiert werden. Das Halteelement ist dazu als teilringförmige, in einer Draufsicht etwa C-förmige, federnde Klammer mit zwei diametral gegenüberliegenden, im Axialschnitt C-förmigen Endabschnitten ausgebildet, die die Flansche der Kupplungsteile axial und radial umgreifen. Eine solche Steckverbindung gewährleistet bei relativ niedrigen Montagekräften hohe Löse- bzw. Abzugskräfte und kann dadurch auch bei hohen Betriebsdrücken eingesetzt werden. Allerdings ist die Montage recht umständlich, weil erst die Kupplungsteile zusammengesteckt und dann so lange manuell fixiert werden müssen, bis die Klammer separat radial aufgesteckt ist. Diese radiale Montage der Klammer erfordert einen entsprechend großen Freiraum am Montageort, weshalb eine Verwendung z. B. bei Aggregaten mit mehreren Steckverbindungen in kleinen Stichmass-Abständen nicht oder nur bedingt möglich ist. Zudem unterliegt die separate Klammer im noch nicht montierten bzw. im nachfolgend wieder gelösten Zustand einer hohen Verlustgefahr. Bei manchen Anwendungen ist es heute erwünscht, in wenigstens eines der Kupplungsteile ein Ventil zum Auslaufschutz zu integrieren. In diesem Fall führt die beschriebene Montageart zu besonderen Problemen, weil die Kupplungsteile gegen eine Ventilfederkraft gesteckt und gegen diese Federkraft auch so lange manuell gehalten werden müssen, bis die Klammer radial aufgesteckt ist. Diese Montage erfordert jedenfalls zwei Hände.

Der vorliegenden Erfindung liegt die Aufgabe zugrunde, eine Steckverbindung der genannten Art so zu verbessern, dass unter Beibehaltung der Vorteile des bekannten Verriegelungsprinzips (insbesondere hohe Abzugskräfte) die Verlustgefahr des Halteelementes reduziert und die Montage vereinfacht wird, und zwar besonders auch in Anwendungsfällen, bei denen am Montageort nur ein kleiner Umgebungsraum zur Verfügung steht und/oder bei denen in den Kupplungsteilen mindestens ein Ventil integriert sein soll.

Erfindungsgemäß wird dies durch die Merkmale des Anspruchs 1 gelöst.

Durch diese erfindungsgemäße Ausgestaltung werden die Vorteile des bekannten, gattungsgemäßen Verriegelungsprinzips mit den Vorteilen eines Steckrastprinzips kombiniert. Im an dem einen Kupplungsteil vormontierten Zustand des Halteelementes braucht nur noch das andere Kupplungsteil gesteckt zu werden. Somit ist eine einfache, schnelle und komfortable sowie auch sehr sichere Einhand-Montage möglich, und zwar vorteilhafterweise auch an Montageorten mit geringem Umgebungsraum in radialer Richtung. Ein Lösen der Verbindung ist weiterhin durch radiale Demontage des Halteelementes möglich.

Weitere vorteilhafte Ausgestaltungsmerkmale der Erfindung sind in den Unteransprüchen sowie der folgenden Beschreibung enthalten.

Anhand eines bevorzugten, in der Zeichnung veranschaulichten Ausführungsbeispiels soll die Erfindung genauer erläutert werden. Dabei zeigen:
- Fig. 1: eine Perspektivansicht einer erfindungsgemäßen Steckverbindung im gesteckten und verriegelten Zustand der Kupplungsteile,
- Fig. 2: eine vergrößerte Axialschnittdarstellung der Steckverbindung gemäß Fig. 1,
- Fig.3: eine perspektivische Explosionsdarstellung der Bestandteile der erfindungsgemäßen Steckverbindung,
- Fig. 4: eine gesonderte Darstellung des einen Kupplungsteils im Axialschnitt analog zu Fig. 2,
- Fig. 5: eine gesonderte Perspektivdarstellung des Halteelementes,
- Fig. 6: eine Perspektivdarstellung des einen Kupplungsteils mit an diesem vormontiert fixiertem Halteelement,
- Fig. 7: einen Axialschnitt des einen Kupplungsteils gemäß Fig. 6 mit vormontiertem Halteelement,
- Fig. 8: einen vergrößerten Querschnitt des Halteelementes in der Schnittebene VIII-VIII gemäß Fig. 9 bzw. Fig. 10,
- Fig. 9: einen Axialschnitt des Halteelementes in der Ebene IX-IX gemäß Fig. 8,
- Fig. 10: einen Axialschnitt des Halteelementes in der Ebene X-X gemäß Fig. 8,
- Fig. 11 a-c: drei Ausführungsvarianten des Halteelementes jeweils in Perspektivansicht.

In den verschiedenen Figuren der Zeichnung sind gleiche Teile stets mit den gleichen Bezugszeichen versehen und brauchen daher in der Regel jeweils nur einmal beschrieben zu werden.

Eine erfindungsgemäße Steckverbindung besteht aus zwei Kupplungsteilen, und zwar aus einem Muffenteil 2 und einem Steckerteil 4. Das Steckerteil 4 ist mit einem Steckerschaft 6 dichtend in eine Aufnahmeöffnung 8 des Muffenteils 2 einsteckbar und im eingesteckten Zustand über eine Verriegelungseinrichtung 10 lösbar arretierbar. Zur Abdichtung ist eine Umfangsdichtung insbesondere in Form eines in einer Ringnut am Steckerschaft 6 angeordneten Dichtrings 12 vorgesehen.

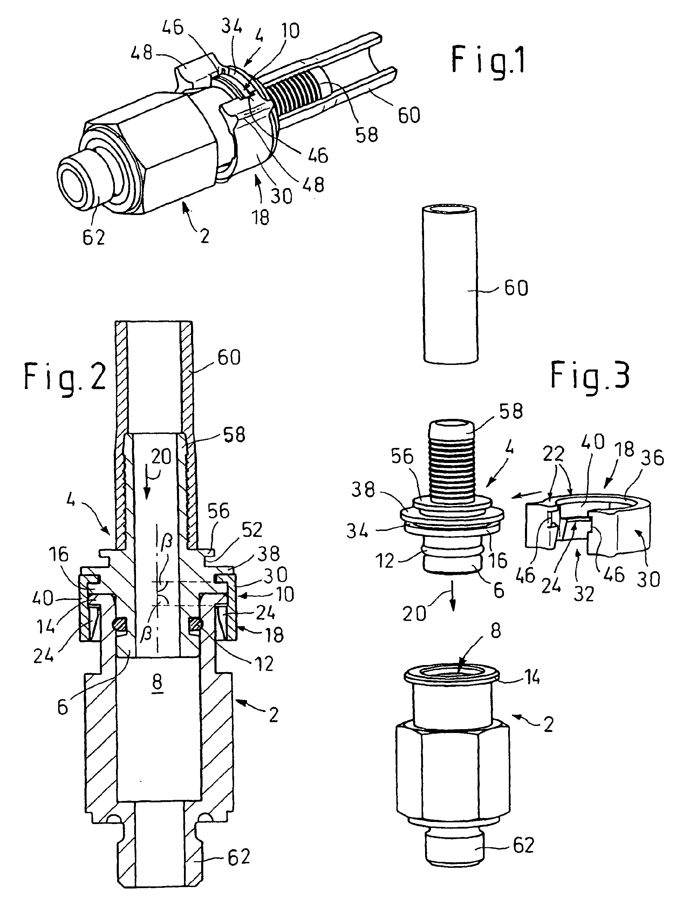

Die Verriegelungseinrichtung 10 besteht einerseits aus zwei äußeren, radialen, flanschartigen Haltestegen 14 und 16 der beiden Kupplungsteile 2, 4 und andererseits aus einem Halteelement 18. Die Haltestege 14, 16 liegen im eingesteckten Zustand axial, in Steckrichtung (Pfeil 20) einander benachbart. Das Halteelement 18 umgreift mit mindestens einem im Axialschnitt C-förmigen Halteabschnitt 22 die Haltestege 14 und 16 der beiden Kupplungsteile 2, 4 axial und radial formschlüssig. Dieser Verriegelungszustand ist in Fig. 1 und 2 dargestellt.

Erfindungsgemäß ist das Halteelement 18 an einem der beiden Kupplungsteile, und zwar bei der dargestellten, bevorzugten Ausführungsform an dem Steckerteil 4, unverlierbar vormontiert bzw. vormontierbar. Dabei sind das Halteelement 18 und das Kupplungsteil 4 in Anpassung aneinander derart ausgebildet, dass das Halteelement 18 einerseits in axialer Richtung spielarm und in radialer Richtung verliersicher fixiert sowie andererseits im Bereich jedes Halteabschnittes 22 radial elastisch beweglich ist. Weiterhin sind das Halteelement 18 im Bereich jedes Halteabschnittes 22 sowie der Haltesteg 14 des anderen Kupplungsteils, bei der dargestellten Ausführung des Muffenteils 2, in Anpassung aneinander zur Bildung einer in Steckrichtung 20 wirkenden, formschlüssigen Rastverbindung derart ausgebildet, dass beim Zusammenstecken der Kupplungsteile 2, 4 jeder Halteabschnitt 22 durch den sich dazu relativ bewegenden Haltesteg 14 radial nach außen bewegt wird und nachfolgend im eingesteckten Zustand durch radiale Zurückbewegung nach innen die Haltestege 14, 16 der beiden Kupplungsteile 2, 4 zur Verriegelung umgreift, wie dies in Fig. 2 dargestellt ist.

Für die erfindungsgemäße Verrastung weist das Halteelement 18 im Bereich jedes Halteabschnittes 22 auf der beim Steckvorgang dem anderen Kupplungsteil 2 zugewandten Seite ein Rastelement 24 auf. Jedes Rastelement 24 weist auf seiner in Steckrichtung 20 vorderen, dem anderen Kupplungsteil 2 zugewandten Seite eine radial innere Schrägfläche 26 sowie auf seiner gegenüberliegenden Seite eine radiale Haltekante 28 auf. Durch den sich beim Stecken relativ bewegenden Haltesteg 14 wird über die Schrägfläche 26 eine radial nach außen gerichtete Spreizbewegung des jeweiligen Rastelementes 24 bewirkt, bis dieses anschließend mit der radialen Haltekante 28 den Haltesteg 14 rastend formschlüssig hintergreift.

An dieser Stelle sei bemerkt, dass auch eine Art kinematische Umkehr möglich ist, indem eine entsprechende Schrägfläche auch an dem Haltesteg 14 gebildet sein kann, um die Halteabschnitte 22 radial zu spreizen.

Bevorzugt ist das Halteelement 18 als einteilige elastische Ringklammer 30 ausgebildet, die zur radial elastischen Verformbarkeit an einer Umfangsstelle eine axial und radial durchgehende Schlitzunterbrechung 32 aufweist. Die Ringklammer 30 weist in einer insbesondere radialsymmetrischen Umfangsverteilung mindestens zwei, wie dargestellt vorzugsweise aber vier im Axialschnitt C-förmige Halteabschnitte 22 auf, so dass auch entsprechend mindestens zwei, vorzugsweise vier Rastelemente 24 vorgesehen sind.

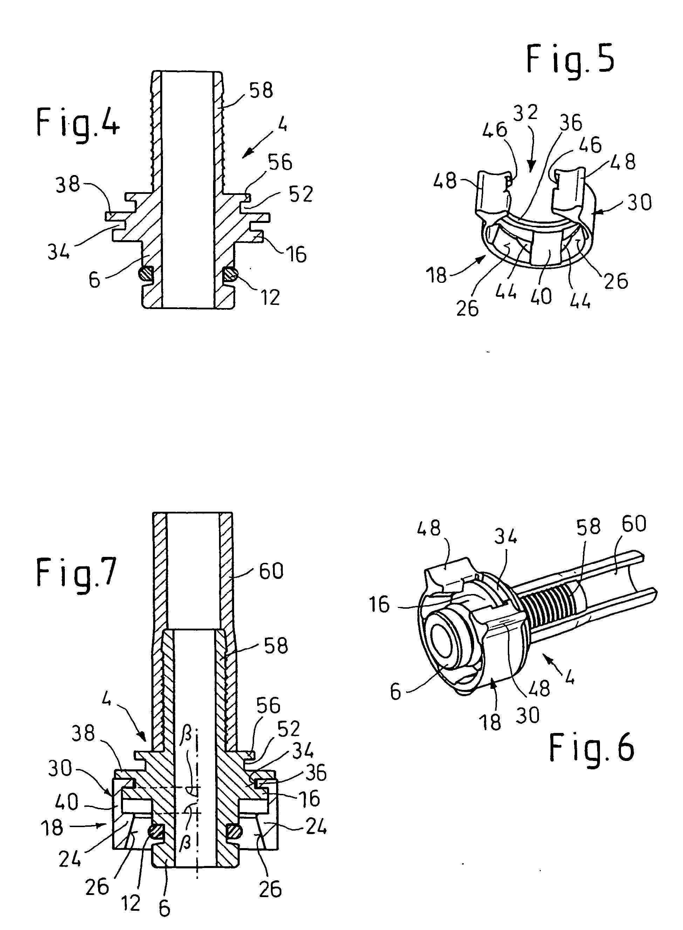

Für die Vormontage-Fixierung des Halteelementes 18 weist das zugehörige Kupplungsteil, bevorzugt das Steckerteil 4, eine radiale Ringnut 34 zur Aufnahme eines korrespondierenden radialen Ringbundes 36 des Halteelementes 18 auf. Der Ringbund 36 ist durch eine quer zur Steckrichtung 20 gerichtete (radiale) Einführbewegung der Ringkammer 30 mit der Schlitzunterbrechung 32 voran unter elastischer Aufweitung der Ringklammer 30 in die Ringnut 34 einführbar. Hierzu wird auf die Darstellung in Fig. 3 hingewiesen. Vorzugsweise ist die radiale Ringnut 34 gemäß Fig. 4 axial zwischen dem Haltesteg 16 und einem zusätzlichen Fixierringsteg 38 gebildet. Dabei weist der Fixierringsteg 38 einen Durchmesser auf, der größer als der Durchmesser des Haltesteges 16 ist. Konkret entspricht der Durchmesser des Haltesteges 16 vorzugsweise etwa dem Innendurchmesser der Ringklammer 30 in den an den Ringbund 36 angrenzenden Innenflächenbereichen der Halteabschnitte 22. Weiterhin weist in einem beim Steckvorgang maximal gespreizten Zustand der Ringklammer 30 deren Ringbund 36 einen Innendurchmesser auf, der etwa gleich dem oder etwas größer als der Durchmesser des Haltesteges 16, jedoch jedenfalls kleiner als der Durchmesser des größeren Fixierringsteges 38 ist. Diese Ausgestaltung gewährleistet eine sichere axiale Abstützung der Ringklammer 30 beim Steckvorgang an dem Fixierringsteg 38.

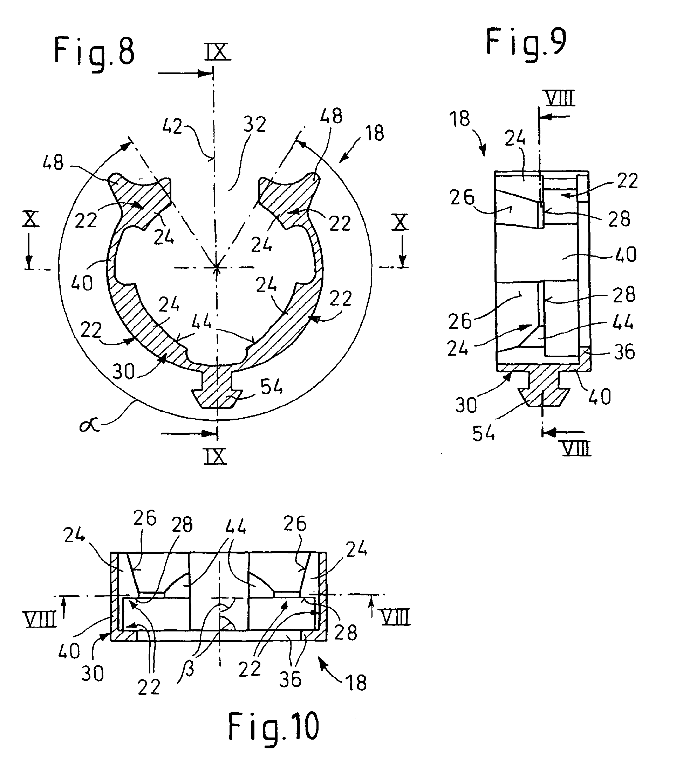

Die Ringklammer 30 erstreckt sich über einen Umfangswinkel (Umschlingungswinkel) α (Fig. 8), der mindestens derart groß bemessen ist, dass im beim Steckvorgang maximal gespreizten Zustand die Schlitzunterbrechung 32 bezüglich ihrer lichten Öffnungsweite stets kleiner als der jeweils zugehörige Durchmesser des Steckerteils 4 ist. Dadurch wird erreicht, dass die Ringklammer 30 das Steckerteil 4 in jedem Bereich seiner axialen Erstreckung über mehr als 180° umgreift. Dadurch ist die Ringklammer 30 verliersicher am Steckerteil 4 fixiert. Zur Montage/Demontage kann aber die Ringklammer 30 jeweils noch etwas weiter elastisch gespreizt bzw. aufgeweitet werden. Die Fixierung erfolgt somit durch kraftformschlüssiges Aufrasten in Querrichtung. Bei der dargestellten Ausführung beträgt der Umfangswinkel α der Ringklammer 30 etwa 300°, so dass sich im Bereich der Schlitzunterbrechung ein Öffnungswinkel von ca. 60° ergibt.

In weiterer vorteilhafter Ausgestaltung ist jeder im Axialschnitt C-förmige Halteabschnitt 22 von einem der Rastelemente 24, einem axial gegenüberliegenden Umfangsabschnitt des Ringbundes 36 sowie einem Teil einer Umfangswandung 40 der Ringklammer 30 gebildet. Hierbei ist es weiterhin vorteilhaft, wenn die Umfangswandung 40 im Bereich der Halteabschnitte 22 eine größere radiale Dicke und im jeweils zwischen den Halteabschnitten 22 liegenden Bereich eine reduzierte Dicke aufweist. Durch diese vorteilhafte Ausgestaltung wird einerseits im Bereich der Halteabschnitte 22 eine hohe Stabilität zur Gewährleistung hoher Abzugskräfte erreicht, und durch die dünneren Abschnitte der Umfangswandung 40 wird jeweils zwischen den Halteabschnitten 22 eine gute (weiche) Radialelastizität erreicht.

Die Halteabschnitte 22 und somit auch die Rastelemente 24 sind mit geradzahliger Anzahl (insbesondere vier) symmetrisch zu einer axial und mittig durch die Schlitzunterbrechung 32 der Ringklammer 30 verlaufenden Mittelebene 42 angeordnet, (vgl. Fig. 8). Dadurch ist auf der der Schlitzunterbrechung 32 diametral gegenüberliegenden Seite im Bereich zwischen zwei Halteabschnitten 22 bzw. Rastelementen 24 durch einen Abschnitt der Umfangswandung 40 mit geringerer Dicke eine Art Gelenk gebildet, welches die Ringklammer 30 in zwei Federarme unterteilt. Zusätzlich sind entsprechende Gelenke auch zwischen den Halteabschnitten 22 bzw. Rastelementen 24 jedes der beiden Federarme gebildet. Hierbei ist es vorteilhaft, wenn die beiden auf der der Schlitzunterbrechung 32 diametral gegenüberliegenden Seite benachbart beidseitig der Mittelebene 42 angeordneten Rastelemente 24 in ihren einander zugewandten Bereichen in radialer Richtung abgeschrägte Freiflächen 44 aufweisen. In diesen Bereichen erfährt die Ringklammer 30 ihre geringste radiale Aufspreizung; die Freiflächen 44 reduzieren hier die Reibung beim Steckvorgang, und es wird ein sehr günstiges Verhältnis von axialen und radialen Kräften erzielt. Dadurch werden die Steckkräfte zusätzlich gesenkt.

Wie sich weiter z. B. aus Fig. 1 und 3 ergibt, sind im Bereich von über die Schlitzunterbrechnung 32 der Ringklammer 30 getrennten, einander in Umfangsrichtung gegenüberliegenden Klammerenden jeweils axial zwischen dem Ringbund 36 und dem jeweiligen Rastelement 24 fensterartige Durchführöffnungen 46 für die Haltestege 14, 16 gebildet. Dies erleichtert die Vormontage und Demontage der Ringklammer 30.

Weiterhin weist die Ringklammer 30 zweckmäßig in ihren an die Schlitzunterbrechung 32 angrenzenden Bereichen Griffelemente 48 zum manuellen Angreifen zum Zwecke des Spreizens der Ringklammer 30 beim radialen Herausnehmen zum Lösen der Verbindung der Kupplungsteile 2, 4 auf.

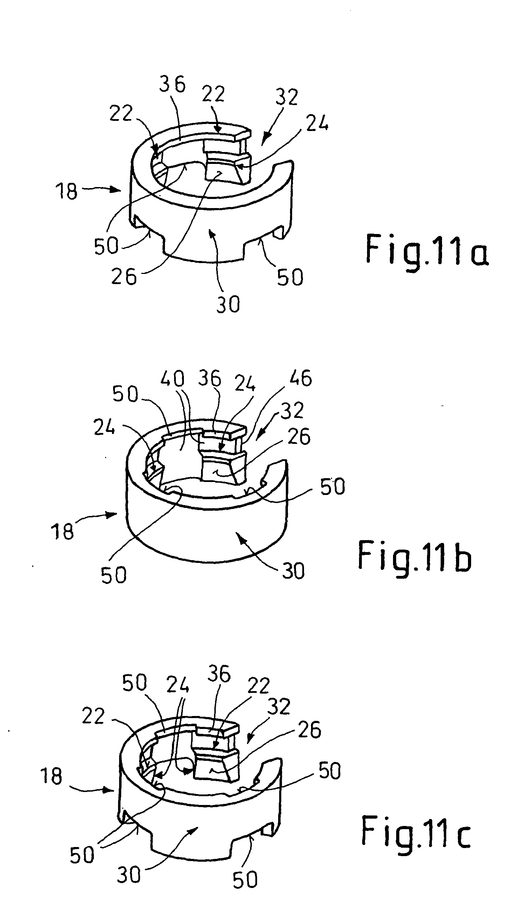

Wie sich aus Fig. 11a bis 11c ergibt, kann die Ringklammer 30 zur Beeinflussung ihrer Radialelastizität im Bereich des Ringbundes 36 und/oder in umfangsgemäß zwischen den Rastelementen 24 der Halteabschnitte 22 liegenden Bereichen Ausnehmungen 50 aufweisen. So sind gemäß Fig. 11a beispielsweise nur auf der einen Axialseite zwischen den Rastelementen 24 entsprechende Ausnehmungen 50 in der Umfangswandung 40 gebildet und gemäß Fig. 11b nur auf der anderen Axialseite im Bereich des Ringbundes 36. Bei der Ausführung gemäß Fig. 11c sind entsprechende Ausnehmungen 50 einander gegenüberliegend auf beiden Axialseiten gebildet. Diese Ausführung gewährleistet eine geringe, weiche Radialfederkraft und dadurch auch geringe Steckkräfte.

Wie bereits erwähnt wurde, können die gemäß Fig. 2 gesteckten und verriegelten Kupplungsteile 2, 4 jederzeit wieder gelöst werden, indem das Halteelement 18 radial entfernt wird. Um auch in diesem gelösten Zustand die Verlustgefahr zu reduzieren, ist das Halteelement 18 vorzugsweise über ein zusätzliches, in der Zeichnung nicht dargestelltes Sicherungselement verliersicher mit dem einen Kupplungsteil, hier mit dem Steckerteil 4, verbunden. Dieses Sicherungselement ist zweckmäßig flexibel, band- oder schnurartig ausgebildet und einendig mit dem Kupplungsteil 4 sowie anderendig mit dem Halteelement 18 verbunden. Für die Verbindung mit dem Kupplungsteil 4 kann das Sicherungselement eine ösenartige Schlaufe aufweisen, die in einer zusätzlichen Haltenut 52 des Kupplungsteils 4 gehalten ist. Für die anderendige Verbindung mit dem Halteelement 18 ist bei der in Fig. 8 und 9 veranschaulichten Ausführung eine Knopfverbindung vorgesehen, wobei das Halteelement 18 auf seiner Außenfläche ein Knopfelement 54 aufweist, auf das ein knopflochartiges Ende des Sicherungselementes aufknöpfbar ist. Die Haltenut 52 des Kupplungsteils 4 ist bevorzugt zwischen dem Fixierringsteg 38 und einem zusätzlichen Ringsteg 56 gebildet. Hierbei ist vorzugsweise vorgesehen, dass der zusätzliche Ringsteg 56 einen kleineren Durchmesser als der Fixierringsteg 38 sowie auch als der Haltesteg 16 aufweist. Durch diese vorteilhafte Ausgestaltung wird eine Fehlmontage beim Vormontieren des Halteelementes 18 weitgehend vermieden, indem auch die zusätzliche Haltenut 52 einen kleineren Durchmesser als die zwischen Haltesteg 16 und Fixierringsteg 38 gebildete Ringnut 34 aufweist.

Das Halteelement 18 kann - insbesondere zur Verwendung der Steckverbindung bei höheren Hydraulikdrücken - aus Metall, z. B. Messing bestehen. Insbesondere zur Verwendung bei geringeren Fluiddrücken kann das Halteelement 18 mit Vorteil auch als Kunststoff-Formteil ausgebildet sein. Dabei wird insbesondere ein glasfaserverstärktes Thermoplast-Material eingesetzt.

Die beiden Kupplungsteile 2, 4 bestehen bevorzugt aus Metall, insbesondere Messing.

In Abweichung von der dargestellten und beschriebenen Ausführung, bei der das Halteelement 18 am Steckerteil 4 vormontiert ist und die Ringklammer 30 folglich den Steckerschaft 6 koaxial mit radialem Abstand umschließt, kann selbstverständlich auch eine entsprechende Vormontage des Halteelementes 18 am Muffenteil 2 vorgesehen sein.

Die Kupplungsteile 2, 4 können auf ihren der Steckverbindungsseite gegenübediegenden Seiten grundsätzlich beliebige Anschlußelemente aufweisen. In der dargestellten Ausführung weist das Steckerteil 4 einen Anschlußdorn 58 für eine Fluid-Leitung 60 (Rohr oder Schlauch) auf. Das Muffenteil 2 besitzt einen Einschraubstutzen 62. Natürlich kann mindestens eines der Kupplungsteile 2, 4 auch direkt (einstückig) an bestimmten Aggregaten ausgebildet sein.

Durch die beschriebene erfindungsgemäße bzw. bevorzugte Ausgestaltung, und zwar indem die Ringklammer 30 und das zugehörigen Kupplungsteil (Steckerteil 4) in ihren Verbindungs- und Eingriffsbereichen aufeinander abgestimmt sind, ist stets eine lagerichtige Vormontage gewährleistet; Fehlmontagen sind konstruktionsbedingt weitgehend ausgeschlossen.

Wie sich noch aus Fig. 10 ergibt, sind die einander axial gegenüberliegenden Halteflächen der Rastelemente 24 und des Ringbundes 36 - und in Anpassung daran natürlich auch die korrespondierenden Halteflächen der Haltestege 14, 16 (vgl. dazu Fig. 2) - mit einem Hinterschneidungswinkel β ≥ 90° ausgelegt, um einen echten Formschluss und dadurch hohe Abzugskräfte zu gewährleisten.

## Patentansprüche

1. Steckverbindung für Fluid-Leitungen, mit einer Verriegelungseinrichtung und zwei zusammensteckbaren Kupplungsteilen (2, 4), die im zusammengesteckten Zustand über die Verriegelungseinrichtung (10) lösbar arretierbar sind, wobei die Verriegelungseinrichtung (10) einerseits aus zwei äußeren, radialen, flanschartigen und mit gleichem Durchmesser im gesteckten Zustand axial, in Steckrichtung (20) benachbarten Haltestegen (14, 16) der beiden Kupplungsteile (2, 4) und andererseits aus einem Halteelement (18) besteht, welches mit mindestens einem im Axialschnitt C-fömigen Halteabschnitt (22) die axial benachbarten Haltestege (14, 16) der beiden Kupplungsteile (2, 4) formschlüssig axial und radial umgreift,
**dadurch gekennzeichnet, dass** das Hafteelement (18) derart ausgebildet und an dem einen (4) der beiden Kupplungsteile (2, 4) derart unverlierbar vormontiert ist, dass es einerseits axial und radial fixiert und andererseits im Bereich des/jedes Halteabschnittes (22) radial elastisch beweglich ist, wobei das Halteelement (18) im Bereich des/jedes Halteabschnittes (22) sowie der Haltesteg (14) des anderen Kupplungsteils (2) in Anpassung aneinander zur Bildung einer in Steckrichtung formschlüssigen Rastverbindung ausgebindet sind.

2. Steckverbindung nach Anspruch 1,
**dadurch gekennzeichnet, dass** die Kupplungsteile als Muffenteil (2) und Steckerteil (4) ausgebildet sind, wobei das Steckerteil (4) mit einem Steckerschaft (6) dichtend in eine Aufnahmeöffnung (8) des Muffenteils (2) einsteckbar und im eingesteckten Zustand über die Verriegelungseinrichtung (10) arretierbar ist.

3. Steckverbindung nach Anspruch 1 oder 2,
**dadurch gekennzeichnet, dass** dasHalteelement(18)im Bereich des/jedes Halteabschnittes (22) auf der beim Steckvorgang dem anderen Kupplungsteil (2) zugewandten Seite ein Rastelement (24) mit einer radialen inneren Schrägfläche (26) aufweist, die durch den sich beim Stecken relativ bewegenden Haltesteg (14) eine radial nach außen gerichtete Spreizbewegung des Rastelementes (24) bewirkt, wobei das/jedes Rastelement (24) mit einer radialen Haltekante (28) den Haltesteg (14) rastend formschlüssig hintergreift.

4. Steckverbindung nach einem der Ansprüche 1 bis 3,
**dadurch gekennzeichnet, dass** das Halteelement (18) als bevorzugt einteilige elastische Ringklammer (30) ausgebildet ist, die zur radialelastischen Verformbarkeit an einer Umfangsstelle eine axial und radial durchgehende Schlitzunterbrechnung (32) aufweist, und die in insbesondere radialsymmetrischer Umfangsverteilung mindestens zwei, vorzugsweise vier im Axialschnitt C-förmige Halteabschnitte (22) aufweist.

5. Steckverbindung nach einem der Ansprüche 1 bis 4,
**dadurch gekennzeichnet, dass** daseineKupplungsteil(4)für die Vormontage-Fixierung des Halteelementes (18) eine radiale Ringnut (34) zur Aufnahme eines korrespondierenden radialen Ringbundes (36) des Halteelementes (18) aufweist, wobei der Ringbund (36) durch eine quer zur Steckrichtung (20) gerichtete Einführbewegung und unter elastischer Aufweitung des Halteelementes (18) in die Ringnut (34) einführbar ist.

6. Steckverbindung nach Anspruch 5,
**dadurch gekennzeichnet, dass** dieradialeRingnut(34)des einen Kupplungsteils (4) axial zwischen dem Haltesteg (16) und einem zusätzlichen Fixierringsteg (38) gebildet ist.

7. Steckverbindung nach Anspruch 6,
**dadurch gekennzeichnet, dass** der Fixierringsteg (38) einen Durchmesser aufweist, der größer als der Durchmesser des Haltestegs (16) ist.

8. Steckverbindung nach Anspruch 7,
**dadurch gekennzeichnet, dass** der Durchmesser des Haltesteges (16) etwa dem Innendurchmesser der Ringklammer (30) in einem an den Ringbund (36) angrenzenden Innenflächenbereich jedes Halteabschnittes (22) entspricht.

9. Steckverbindung nach einem der Ansprüche 6 bis 8,
**dadurch gekennzeichnet, dass** in einem beim Steckvorgang maximal gespreizten Zustand der Ringklammer (30) deren Ringbund (36) einen Innendurchmesser aufweist, der etwa gleich dem Durchmesser des Haltesteges (16), jedoch jedenfalls kleiner als der Durchmesser des größeren Fixierringsteges (38) ist.

10. Steckverbindung nach einem der Ansprüche 4 bis 9, zumindest nach Anspruch 4,
**dadurch gekennzeichnet, dass** die Ringklammer (30) sich über einen Umfangswinkel (α) erstreckt, der mindestens derart groß bemessen ist, dass im beim Steckvorgang maximal gespreizten Zustand die Schlitrunterbrechung bezüglich ihrer lichten Öffnungsweite stets kleiner als der jeweils zugehörige Durchmesser des einen Kupplungsteils (4) ist.

11. Steckverbindung nach einem der Ansprüche 4 bis 10,
**dadurch gekennzeichnet, dass** der/jeder im Axialschnitt C-förmige Halteabschnitt (22) des Halteelementes (18) von einem der Rastelemente (24) und einem axial gegenüberliegenden Umfangsabschnitt des Ringbundes (36) sowie einem Teil einer Umfangswandung (40) der Ringklammer (30) gebildet ist.

12. Steckverbindung nach einem der Ansprüche 4 bis 11, zumindest nach Anspruch 4,
**dadurch gekennzeichnet, dass** die Rastelemente (24) mit geradzahliger Anzahl symmetrisch zur einer axial und mittig durch die Schlitzunterbrechung (32) der Ringklammer (30) verlaufenden Mittelebene (42) angeordnet sind, wobei zwei auf der der Schlitzunterbrechung (32) diametral gegenüberliegenden Seite benachbart beidseitig der Mittelebene (42) angeordnete Rastelemente (24) in ihren einander zugewandten Bereichen in radialer Richtung abgeschrägte Freiflächen (44) aufweisen.

13. Steckverbindung nach einem der Ansprüche 4 bis 12, zumindest nach Anspruch 4,
**dadurch gekennzeichnet, dass** im Bereich von über die Schlitzunterbrechung (32) der Ringklammer (30) getrennten, einander in Umfangsrichtung gegenüberliegenden Klammerenden jeweils axial zwischen dem Ringbund (36) und dem jeweiligen Rastelement (24) Durchführöffnungen (46) für die Haltestege (14, 16) gebildet sind.

14. Steckverbindung nach einem der Ansprüche 4 bis 13, zumindest nach Anspruch 4,
**dadurch gekennzeichnet, dass** dieRingklammer(30)inihren an die Schlitzunterbrechung (32) angrenzenden Bereichen Griffelemente (48) zum manuellen Angreifen der Ringklammer (30) zum Lösen der Verbindung der Kupplungsteile (2, 4) aufweist.

15. Steckverbindung nach einem der Ansprüche 4 bis 14,
**dadurch gekennzeichnet, dass** dieRingklammer(30)im Bereich des Ringbundes (36) und/oder in zwischen den Rastelementen (24) liegenden Bereichen Ausnehmungen (50) aufweist.

16. Steckverbindung nach einem der Ansprüche 1 bis 15,
**dadurch gekennzeichnet, dass** dasHaltelement(18)überein zusätzliches Sicherungselement verliersicher mit dem einen Kupplungsteil (4) verbunden ist.

17. Steckverbindung nach Anspruch 16,
**dadurch gekennzeichnet, dass** das Sicherungselement flexibel, band- oder schnurartig ausgebildet und einendig insbesondere mit einer Ösenschlaufe in einer zusätzlichen Haltenut (52) des einen Kupplungsteils (4) gehalten sowie anderendig vorzugsweise über eine Knopfverbindung mit dem Halteelement (18) verbunden ist.

18. Steckverbindung nach Anspruch 17,
**dadurch gekennzeichnet, dass** dieHaltenut(52)zwischendem Fixierringsteg (38) und einem zusätzlichen Ringsteg (56) gebildet ist, wobei der zusätzliche Ringsteg (56) vorzugsweise einen kleineren Durchmesser als der Fixierringsteg (38) und auch als der Haltesteg (16) aufweist.

19. Steckverbindung nach einem der Ansprüche 1 bis 18, insbesondere zur Verwendung bei höheren Hydraulikdrücken,
**dadurch gekennzeichnet, dass** das Halteelement (18) aus Metall besteht.

20. Steckverbindung nach einem der Ansprüche 1 bis 18, insbesondere zur Verwendung bei geringeren Fluiddrücken,
**dadurch gekennzeichnet, dass** dsHalteelement(18)zumindest anteilig als Kunststoff-Formteil ausgebildet ist.

21. Steckverbindung nach Anspruch 20,
**dadurch gekennzeichnet, dass** dieRastelemente(24)aus Metall bestehen und in das Kunststoff-Formteil eingebettet, insbesondere umspritzt sind.

22. Steckverbindung nach einem der Ansprüche 1 bis 21,
**dadurch gekennzeichnet, dass** das Halteelement(18)am Steckerteil (4) vormontiert ist.

23. Steckverbindung nach einem der Ansprüche 1 bis 22,
**dadurch gekennzeichnet, dass** die Kupplungsteile (2, 4) aus Metall bestehen.

## Claims

1. A plug-in connection for fluid lines, with a locking means and two coupling parts (2, 4) capable of being plugged together which in the plugged-together state can be detachably locked via the locking means (10), the locking means (10) consisting on one hand of two outer, radial, flange-like holding crosspieces (14, 16) of the two coupling parts (2, 4) which adjoin one another with the same diameter in the plugged state axially, in the direction of insertion (20), and on the other hand of a holding element (18) which engages around the axially adjoining holding crosspieces (14, 16) of the two coupling parts (2, 4) axially and radially in positive manner with at least one holding section (22) which is C-shaped in axial section,
**characterised in that** the holding element (18) is designed such, and premounted undetachably on one (4) of the two coupling parts (2, 4) such, that it on one hand is axially and radially fixed and on the other hand is radially elastically movable in the region of the/each holding section (22), the holding element (18) in the region of the/each holding section (22) and also the holding crosspiece (14) of the other coupling part (2) being designed to adapt to one another for the formation of a latch connection which is positive in the direction of insertion.

2. A plug-in connection according to Claim 1, **characterised in that** the coupling parts are designed as a sleeve part (2) and a plug part (4), the plug part (4) being able to be inserted in sealing manner with a plug shank (6) into a receiving opening (8) of the sleeve part (2) and being able to be locked in the inserted state by means of the locking means (10).

3. A plug-in connection according to Claim 1 or 2, **characterised in that** the holding element (18), in the region of the/each holding section (22) on the side which faces the other coupling part (2) during the insertion operation, has a latch element (24) with a radial inner inclined surface (26) which, due to the holding crosspiece (14) which moves relatively upon plugging, effects a radially outward-directed spreading movement of the latch element (24), the/each latch element (24) engaging with a radial holding edge (28) in a positive manner behind the holding crosspiece (14) by latching.

4. A plug-in connection according to one of Claims 1 to 3, **characterised in that** the holding element (18) is designed as a preferably one-piece elastic ring clamp (30), which for radially elastic deformability at a peripheral point has an axially and radially through-going slot-type interruption (32), and which has at least two, preferably four, holding sections (22) which are C-shaped in axial section in an in particular radially symmetrical peripheral distribution.

5. A plug-in connection according to one of Claims 1 to 4, **characterised in that** one coupling part (4), for the premounting fixing of the holding element (18), has a radial ring groove (34) for receiving a corresponding radial ring collar (36) of the holding element (18), the ring collar (36) being able to be inserted into the ring groove (34) by an introduction movement directed transversely to the direction of insertion (20) and with elastic expansion of the holding element (18).

6. A plug-in connection according to Claim 5, **characterised in that** the radial ring groove (34) of the one coupling part (4) is formed axially between the holding crosspiece (16) and an additional fixing ring crosspiece (38).

7. A plug-in connection according to Claim 6, **characterised in that** the fixing ring crosspiece (38) has a diameter which is greater than the diameter of the holding crosspiece (16).

8. A plug-in connection according to Claim 7, **characterised in that** the diameter of the holding crosspiece (16) corresponds approximately to the internal diameter of the ring clamp (30) in an inner surface region, which adjoins the ring collar (36), of each holding section (22).

9. A plug-in connection according to one of Claims 6 to 8, **characterised in that** in a state of the ring clamp (30) which is spread to a maximum during the insertion operation, the ring collar (36) thereof has an internal diameter which is approximately equal to the diameter of the holding crosspiece (16), but in any case less than the diameter of the larger fixing ring crosspiece (38).

10. A plug-in connection according to one of Claims 4 to 9, at least according to Claim 4, **characterised in that** the ring clamp (30) extends over a circumferential angle (α) which is at least so large that in the state which is spread to a maximum during the insertion operation the slot-type interruption with respect to its internal opening width is always less than the diameter of the one coupling part (4) which is associated in each case.

11. A plug-in connection according to one of Claims 4 to 10, **characterised in that** the/each holding section (22) of the holding element (18) which is C-shaped in axial section is formed by one of the latch elements (24) and an axially opposed peripheral section of the ring collar (36) and also a part of a peripheral wall (40) of the ring clamp (30).

12. A plug-in connection according to one of Claims 4 to 11, at least according to Claim 4, **characterised in that** the latch elements (24) are in an even number symmetrically to a centre plane (42) extending axially and centrally through the slot-type interruption (32) of the ring clamp (30), with two latch elements (24) arranged adjacent on both sides of the centre plane (42) on the side diametrically opposite the slot-type interruption (32) having in their regions facing one another free surfaces (44) which are chamfered in the radial direction.

13. A plug-in connection according to one of Claims 4 to 12, at least according to Claim 4, **characterised in that** passage openings (46) for the holding crosspieces (14, 16) are formed in each case axially between the ring collar (36) and the respective latch element (24) in the region of clamp ends which are separated via the slot-type interruption (32) of the ring clamp (30) and which lie opposite one another in the peripheral direction.

14. A plug-in connection according to one of Claims 4 to 13, at least according to Claim 4, **characterised in that** the ring clamp (30) has in its regions adjoining the slot-type interruption (32) grip elements (48) for manually acting on the ring clamp (30) for releasing the connection of the coupling parts (2, 4).

15. A plug-in connection according to one of Claims 4 to 14, **characterised in that** the ring clamp (30) has cutouts (50) in the region of the ring collar (36) and/or in regions lying between the latch elements (24).

16. A plug-in connection according to one of Claims 1 to 15, **characterised in that** the holding element (18) is connected undetachably to the one coupling part (4) via an additional securing element.

17. A plug-in connection according to Claim 16, **characterised in that** the securing element is designed flexibly, in a strip-like or in a cord-like manner and is held at one end in particular with an eye loop in an additional holding groove (52) of the one coupling part (4) and also is connected at the other end to the holding element (18) preferably via a stud connection.

18. A plug-in connection according to Claim 17, **characterised in that** the holding groove (52) is formed between the fixing ring crosspiece (38) and an additional ring crosspiece (56), the additional ring crosspiece (56) preferably having a smaller diameter than the fixing ring crosspiece (38) and also than the holding crosspiece (16).

19. A plug-in connection according to one of Claims 1 to 18, in particular for use at higher hydraulic pressures, **characterised in that** the holding element (18) is made of metal.

20. A plug-in connection according to one of Claims 1 to 18, in particular for use at lower fluid pressures, **characterised in that** the holding element (18) is formed at least in part as a shaped plastics part.

21. A plug-in connection according to Claim 20, **characterised in that** the latch elements (24) are made of metal and are embedded, in particular injected around, in the shaped plastics part.

22. A plug-in connection according to one of Claims 1 to 21, **characterised in that** the holding element (18) is premounted on the plug part (4).

23. A plug-in connection according to one of Claims 1 to 22, **characterised in that** the coupling parts (2, 4) are made of metal.

## Revendications

1. Raccord emboîtable pour conduites fluidiques, avec un dispositif de verrouillage et deux pièces d'accouplement (2, 4) pouvant être assemblées et qui peuvent être bloquées de façon amovible à l'état assemblé par l'intermédiaire du dispositif de verrouillage (10), le dispositif de verrouillage (10) étant composé d'une part de deux entretoises de retenue (14, 16) extérieures, radiales, de type flasque et de diamètre identique, axialement adjacentes à l'état emboîté dans la direction d'emboîtement (20), des deux pièces d'accouplement (2, 4), et d'autre part d'un élément de retenue (18) qui enserre avec au moins une portion de retenue (22) en forme de C en section axiale les entretoises de retenue (14, 16) axialement adjacentes des deux pièces d'accouplement (2, 4) par complémentarité de forme de façon axiale et radiale,
**caractérisé en ce que** l'élément de retenue (18) est réalisé de telle sorte et prémonté de façon imperdable sur ladite une pièce (4) des deux pièces d'accouplement (2, 4) de telle sorte qu'il est d'une part fixé axialement et radialement et d'autre part mobile de façon radialement élastique dans la zone de la/chaque portion de retenue (22), l'élément de retenue (18) dans la zone de la/chaque portion de retenue (22) ainsi que l'entretoise de retenue (14) de l'autre pièce d'accouplement (2) étant réalisés en adaptation mutuelle pour former un raccord par enclenchement à complémentarité de forme dans la direction d'emboîtement.

2. Raccord emboîtable selon la revendication 1, **caractérisé en ce que** les pièces d'accouplement sont réalisées comme une pièce formant manchon (2) et une pièce formant connecteur (4), la pièce formant connecteur (4) pouvant être emboîtée avec une tige de connecteur (6) de façon étanche dans une ouverture de réception (8) de la pièce formant manchon (2) et pouvant être bloquée à l'état emboîté par l'intermédiaire du dispositif de verrouillage (10).

3. Raccord emboîtable selon la revendication 1 ou 2, **caractérisé en ce que** l'élément de retenue (18) présente dans la zone de la/chaque portion de retenue (22), du côté tourné vers l'autre pièce d'accouplement (2) lors de l'opération d'emboîtement, un élément d'enclenchement (24) avec une surface inclinée intérieure radiale (26) qui provoque par l'entretoise de retenue (14), qui se déplace de façon relative lors de l'emboîtement, un mouvement d'écartement dirigé radialement vers l'extérieur de l'élément d'enclenchement (24), ledit/chaque élément d'enclenchement (24) passant avec un bord de retenue radial (28) derrière l'entretoise de retenue (14) en s'enclenchant par complémentarité de forme.

4. Raccord emboîtable selon l'une quelconque des revendications 1 à 3, **caractérisé en ce que** l'élément de retenue (18) est réalisé de préférence comme un circlips élastique en une pièce (30) qui présente en vue d'une capacité de déformation radialement élastique en un point de circonférence une rupture en fente (32) axialement et radialement traversante, et qui présente dans une distribution circonférentielle, en particulier radialement symétrique, deux, de préférence quatre portions de retenue (22) en forme de C en section axiale.

5. Raccord emboîtable selon l'une quelconque des revendications 1 à 4, **caractérisé en ce que** ladite une pièce d'accouplement (4) présente pour la fixation en prémontage de l'élément de retenue (18) une rainure annulaire radiale (34) pour recevoir un épaulement annulaire radial (36) correspondant de l'élément de retenue (18), l'épaulement annulaire (36) pouvant être introduit dans la rainure annulaire (34) par un mouvement d'introduction dirigé transversalement à la direction d'emboîtement (20) et sous un élargissement élastique de l'élément de retenue (18).

6. Raccord emboîtable selon la revendication 5, **caractérisé en ce que** la rainure annulaire (34) de ladite une pièce d'accouplement (4) est formée axialement entre l'entretoise de retenue (16) et une entretoise annulaire de fixation (38) supplémentaire.

7. Raccord emboîtable selon la revendication 6, **caractérisé en ce que** l'entretoise annulaire de fixation (38) présente un diamètre qui est supérieur au diamètre de l'entretoise de retenue (16).

8. Raccord emboîtable selon la revendication 7, **caractérisé en ce que** le diamètre de l'entretoise de retenue (16) correspond approximativement au diamètre intérieur du circlips (30) dans une zone de surface intérieure de chaque portion de retenue (22), adjacente à l'épaulement annulaire (36).

9. Raccord emboîtable selon l'une quelconque des revendications 6 à 8, **caractérisé en ce que** lors de l'opération d'emboîtement, dans un état du circlips (30) écarté au maximum, l'épaulement annulaire (36) de celui-ci présente un diamètre intérieur qui est approximativement égal au diamètre de l'entretoise de retenue (16), mais en tout cas inférieur au diamètre de l'entretoise annulaire de fixation (38) plus grande.

10. Raccord emboîtable selon l'une quelconque des revendications 4 à 9, au moins selon la revendication 4, **caractérisé en ce que** le circlips (30) s'étend sur un angle de circonférence (α) qui est dimensionné au moins de telle sorte qu'à l'état écarté au maximum lors de l'opération d'emboîtement, la rupture en fente est toujours plus petite en ce qui concerne sa largeur d'ouverture libre que le diamètre respectivement associé de ladite une pièce d'accouplement (4).

11. Raccord emboîtable selon l'une quelconque des revendications 4 à 10, **caractérisé en ce que** la/chaque portion de retenue (22) en forme de C en section axiale, de l'élément de retenue (18), est formée par l'un des éléments d'enclenchement (24) et une portion circonférentielle axialement opposée, de l'épaulement annulaire (36), ainsi que par une partie d'une paroi circonférentielle (40) du circlips (30).

12. Raccord emboîtable selon l'une quelconque des revendications 4 à 11, au moins selon la revendication 4, **caractérisé en ce que** les éléments d'enclenchement (24) sont disposés en nombre pair de façon symétrique par rapport à un plan central (42) s'étendant de façon axiale et centrée à travers la rupture en fente (32) du circlips (30), deux éléments d'enclenchement (24) disposés du côté diamétralement opposé à la rupture en fente (32), de façon adjacente des deux côtés du plan central (42), présentent dans leurs zones tournées l'une vers l'autre des surfaces libres (44) biseautées dans la direction radiale.

13. Raccord emboîtable selon l'une quelconque des revendications 4 à 12, au moins selon la revendication 4, **caractérisé en ce que** dans la zone des extrémités de serrage opposées l'une à l'autre dans la direction circonférentielle et séparées par la rupture en fente (32) du circlips (30), respectivement axialement entre l'épaulement annulaire (36) et l'élément d'enclenchement (24) respectif, des ouvertures de passage (46) pour les entretoises de retenue (14, 16) sont formées.

14. Raccord emboîtable selon l'une quelconque des revendications 4 à 13, au moins selon la revendication 4, **caractérisé en ce que** le circlips (30) présente, dans ses zones adjacentes à la rupture en fente (32), des éléments de préhension (48) pour saisir manuellement le circlips (30) en vue de défaire le raccord des pièces d'accouplement (2, 4).

15. Raccord emboîtable selon l'une quelconque des revendications 4 à 14, **caractérisé en ce que** le circlips (30) présente des évidements (50) dans la zone de l'épaulement annulaire (36) et/ou dans des zones situées entre les éléments d'enclenchement (24).

16. Raccord emboîtable selon l'une quelconque des revendications 1 à 15, **caractérisé en ce que** l'élément de retenue (18) est relié de façon perdable à ladite une pièce d'accouplement (4) par l'intermédiaire d'un élément d'ancrage supplémentaire.

17. Raccord emboîtable selon la revendication 16, **caractérisé en ce que** l'élément d'ancrage est réalisé de façon flexible, à la manière d'un ruban ou d'une ficelle, et est retenu au niveau d'une extrémité en particulier par une boucle à oeillet dans une rainure de retenue (52) supplémentaire de ladite une pièce d'accouplement (4) et est relié au niveau de l'autre extrémité à l'élément de retenue (18), de préférence par l'intermédiaire d'une connexion par bouton.

18. Raccord emboîtable selon la revendication 17, **caractérisé en ce que** la rainure de retenue (52) est formée entre l'entretoise annulaire de fixation (38) et une entretoise annulaire supplémentaire (56), l'entretoise annulaire supplémentaire (56) présentant de préférence un diamètre inférieur à l'entretoise annulaire de fixation (38) et également à celui de l'entretoise de retenue (16).

19. Raccord emboîtable selon l'une quelconque des revendications 1 à 18, en particulier pour une utilisation à des pressions hydrauliques supérieures, **caractérisé en ce que** l'élément de retenue (18) est composé de métal.

20. Raccord emboîtable selon l'une quelconque des revendications 1 à 18, en particulier pour une utilisation à des pressions fluidiques inférieures, **caractérisé en ce que** l'élément de retenue (18) est réalisé au moins en partie comme une pièce moulée en plastique.

21. Raccord emboîtable selon la revendication 20, **caractérisé en ce que** les éléments d'enclenchement (24) sont composés de métal et sont encastrés, en particulier surmoulés, dans la pièce moulée en plastique.

22. Raccord emboîtable selon l'une quelconque des revendications 1 à 21, **caractérisé en ce que** l'élément de retenue (18) est prémonté sur la pièce formant connecteur (4).

23. Raccord emboîtable selon l'une quelconque des revendications 1 à 22, **caractérisé en ce que** les pièces d'accouplement (2, 4) sont composées de métal.
